# EUROPEAN PATENT SPECIFICATION

(11) **EP 4 462 585 B1**
(45) Date of publication and mention of the grant of the patent: **04.03.2026**
(21) Application number: 23875129.1
(22) Date of filing: 22.09.2023
(51) Int. Cl.: H01M 50/591, H01M 50/588, H01M 50/569, H01M 50/522, H01M 50/204, H01M 10/48, H01M 50/505, H01M 50/507, H01M 50/524

(54) **BUS BAR ASSEMBLY IN WHICH TEMPERATURE MEASUREMENT FOR BUS BAR IS FACILITATED, AND BATTERY PACK COMPRISING SAME**
SAMMELSCHIENENANORDNUNG MIT VERBESSERTER TEMPERATURMESSUNG FÜR SAMMELSCHIENE UND BATTERIEPACK DAMIT
ENSEMBLE BARRE OMNIBUS DANS LEQUEL UNE MESURE DE TEMPÉRATURE POUR BARRE OMNIBUS EST FACILITÉE, ET BLOC-BATTERIE LE COMPRENANT

(30) Priority: 04.10.2022 KR 20220126180
(43) Date of publication of application: 13.11.2024
(73) Proprietor: LG Energy Solution, Ltd., Seoul 07335 (KR)
(72) Inventor: YUN, Sun Woo, Daejeon 34122 (KR)
(74) Representative: Goddar, Heinz J.
(86) International application number: PCT/KR2023/014461
(87) International publication number: WO 2024/076063

(56) References cited:
- JP-A- 2016 122 577
- JP-A- 2016 122 577
- KR-A- 20130 114 419
- KR-A- 20180 045 794
- KR-B1- 101 815 152
- US-A1- 2018 026 251

## Description

### [Technical Field]

This application claims the benefit of priority to Korean Patent Application No. 2022-0126180 filed on October 4, 2022.

The present invention relates to a busbar assembly configured such that the temperature of a busbar is easily measured and a battery pack including the same, and more particularly to a busbar assembly configured such that the temperature of a busbar is easily measured, wherein change in temperature of the busbar is measured and verified in real time, and a battery pack including the same.

### [Background Art]

With recent development of alternative energies due to air pollution and energy depletion caused as the result of use of fossil fuels, demand for secondary batteries capable of storing electrical energy has increased. Secondary batteries, which are capable of being charged and discharged, are intimately used in daily life. For example, secondary batteries are used in mobile devices, electric vehicles, and hybrid electric vehicles.

Required capacities of secondary batteries used as energy sources for various kinds of electronic devices inevitably used in modern society have increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

Meanwhile, in a battery pack, high current flows in a busbar, relative to the area of the busbar, due to increased output for fast charging, high capacity, and light weight, such that the importance of detecting and measuring a change in temperature of the busbar has increased.

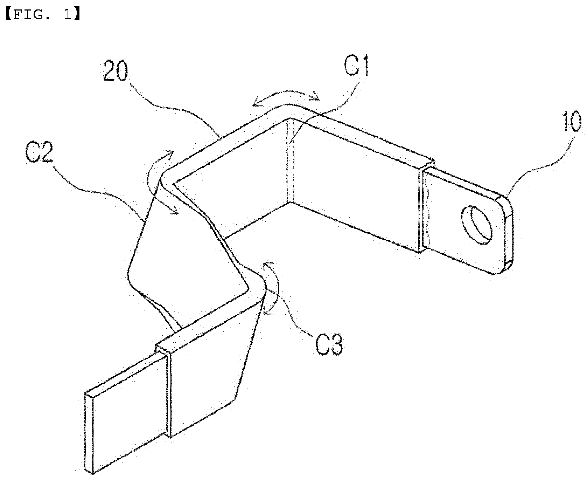

FIG. 1 is a perspective view showing a conventional busbar. As shown in FIG. 1, a conventional flexible busbar assembly includes a busbar 10 configured to electrically connect adjacent battery modules to each other and a cover member 20 configured to wrap the busbar 10.

A specific part of the conventional flexible busbar assembly may be deformed into a desired shape, for example by bending, in order to easily electrically connect battery modules provided on a complex path to each other.

In the conventional flexible busbar assembly, however, a separate temperature measurement device configured to measure the temperature of the busbar 10 is not provided, and even though a temperature measurement device is provided, a means configured to fix the temperature measurement device to the busbar 10 in tight contact is not provided.

In addition, it is not easy to bring the temperature measurement device into direct contact with the busbar 10, such that the reliability of the temperature measurement value of the busbar 10 may be reduced.

### (Prior Art Document)

(Patent Document 1) Korean Patent Application Publication No. 2015-0101154

The Document JP 2016 122 577 A (D1) discloses a mounting structure of a temperature detection member to a bus bar and a wiring module.

### [Disclosure]

### [Technical Problem]

The present invention has been made in view of the above problems, and it is an object of the present invention to provide a busbar assembly according to the features of claim 1 that is configured such that a temperature measurement device is fixed to a busbar in direct contact with the busbar and a battery pack including the same.

### [Technical Solution]

A busbar assembly according to the present invention to accomplish the above objects, and according to the features of claim 1, includes a busbar (100) made of a copper material, a cover member (200) configured to wrap around a part of the busbar (100), a cover cap (300) located so as to wrap around one side of the cover member (200) and the busbar (100) protruding from the one side of the cover member (200), and a thermistor assembly (400) positioned such that the cover cap (300) wraps around the thermistor assembly, the thermistor assembly being in tight contact with the busbar (100), wherein the cover cap (300) includes a first receiving portion (310) and a second receiving portion (320), the first receiving portion (310) located at a part of the busbar (100) protruding toward the one side of the cover member (200), and the second receiving portion (320) located between the first receiving portion (310) and the cover member (200).

Also, in the busbar assembly according to the present invention, the cover cap (300) may be made of a material that is electrically insulative and elastic.

Also, in the busbar assembly according to the present invention, the material may include at least one of silicone, rubber, polyurethane, mica, a plastic resin, glass fiber woven fabric, and a mixture of mPPO and glass fiber.

Also, in the busbar assembly according to the present invention, the thermistor assembly (400) may include a tight-contact plate (410) in tight contact with the busbar (100), a thermistor (420) attached to the tight-contact plate (410), the thermistor being configured to measure temperature, and a wire (430) connected to the thermistor (420) and extending out of the cover cap (300).

Also, in the busbar assembly according to the present invention, the thermistor (420) may be received in the second receiving portion (320).

Also, in the busbar assembly according to the present invention, the second receiving portion (320) may be configured to have a size such that an inner surface of the second receiving portion (320) is in tight contact with the thermistor (420).

Also, in the busbar assembly according to the present invention, the second receiving portion (320) may configured to have a shape and a size such that the inner surface of the second receiving portion (320) is spaced apart from the thermistor (420).

Also, in the busbar assembly according to the present invention, the tight-contact plate (410) may include a material that is electrically insulative and thermally conductive.

Also, in the busbar assembly according to the present invention, an adhesive tape (500) configured to fix the tight-contact plate (410) may be attached to a lower surface of the tight-contact plate (410).

Also, in the busbar assembly according to the present invention, the tight-contact plate (410) may have an area greater than the horizontal sectional area of the second receiving portion (320).

Also, in the busbar assembly according to the present invention, the cover cap (300) may include a recess (330) having a predetermined depth such that the wire (430) can be inserted into the recess.

Also, in the busbar assembly according to the present invention, the cover cap (300) may include an inclined portion (340) inclined at a predetermined angle from a lower end of the second receiving portion (320) in a direction toward the recess (330).

Also, in the busbar assembly according to the present invention, an adhesive tape (500) configured to fix the wire (430) may be attached to a lower surface of the wire (430).

In addition, the present invention provides a battery pack including a busbar assembly having the aforementioned features.

### [Advantageous Effects]

As is apparent from the above description, a busbar assembly according to the present invention has an advantage in that a cover cap is provided, whereby it is possible to easily fix a thermistor assembly when the temperature of a busbar is measured through the thermistor assembly while the insulated state of the busbar is maintained.

In addition, the busbar assembly according to the present invention has an advantage in that a thermistor of the thermistor assembly can directly measure the temperature of the busbar, whereby the accuracy and rapidness of measurement results are improved.

### [Description of Drawings]

FIG. 1 is a perspective view of a conventional busbar.
FIG. 2 is a perspective view showing a busbar assembly according to a first preferred embodiment of the present invention.
FIG. 3 is a sectional view of the busbar assembly according to the first preferred embodiment of the present invention, cut in a vertical direction.
FIG. 4 is a sectional view taken along line A-A of FIG. 3.
FIG. 5 is a sectional view taken along line B-B of FIG. 3.
FIG. 6 is a sectional view of a busbar assembly according to a second preferred embodiment of the present invention, cut in the vertical direction.
FIG. 7 is a sectional view taken along line A-A of FIG. 6.
FIG. 8 is a sectional view of a busbar assembly according to a third preferred embodiment of the present invention, cut in the vertical direction.
FIG. 9 is a sectional view taken along line A-A of FIG. 8.
FIG. 10 is a sectional view of a busbar assembly according to a fourth preferred embodiment of the present invention, cut in the vertical direction.
FIG. 11 is a sectional view taken along line A-A of FIG. 10.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, the fact that a certain element is included does not mean that other elements are excluded, but rather means that such elements may be further included unless mentioned otherwise.

Hereinafter, a busbar assembly configured such that the temperature of a busbar is easily measured according to the present invention and a battery pack including the same will be described in detail with reference to the accompanying drawings.

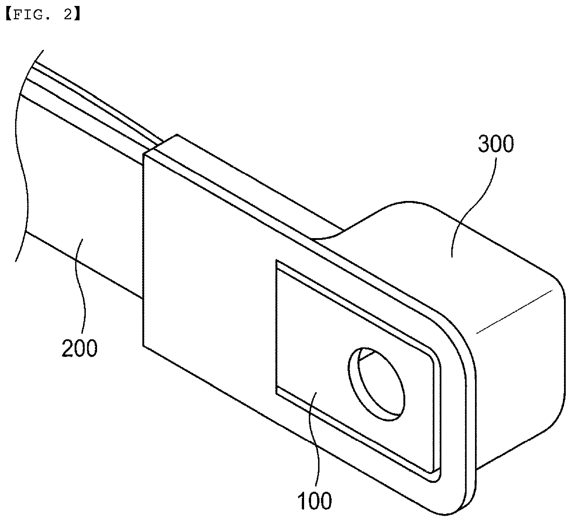

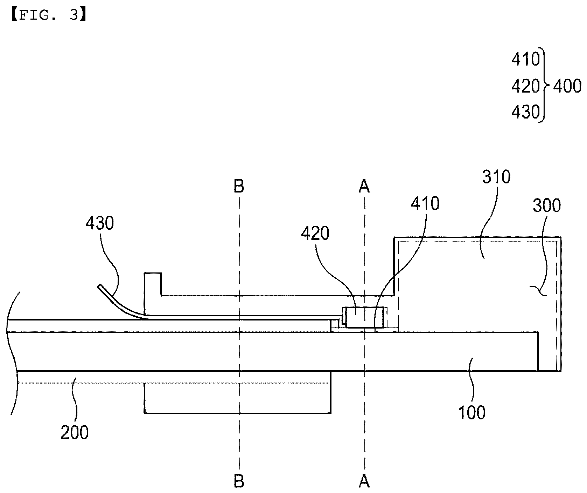

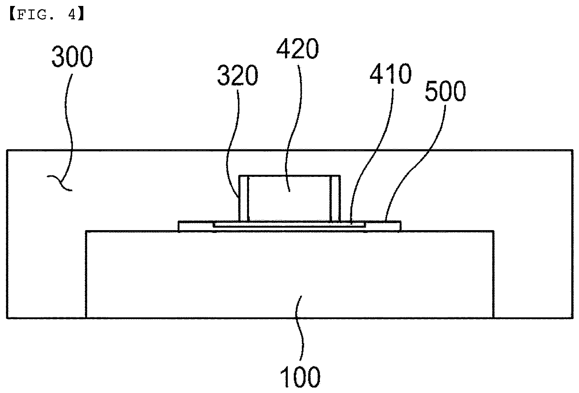

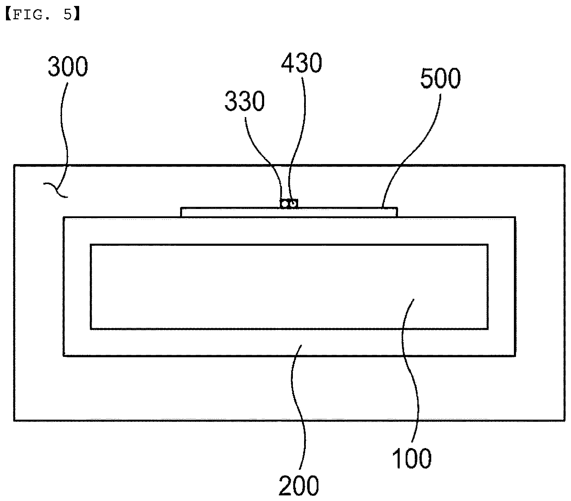

FIG. 2 is a perspective view showing a busbar assembly according to a first preferred embodiment of the present invention, FIG. 3 is a sectional view of the busbar assembly according to the first preferred embodiment of the present invention, cut in a vertical direction, FIG. 4 is a sectional view taken along line A-A of FIG. 3, and FIG. 5 is a sectional view taken along line B-B of FIG. 3.

As shown in FIGs. 2 to 5, the busbar assembly according to the present disclosure includes a busbar 100, a cover member 200, a cover cap 300, and a thermistor assembly 400.

The busbar 100 may be made of a flat copper material, and each of opposite ends of the busbar 100 may be electrically connected to a battery module adjacent thereto.

The cover member 200 may wrap around a part of the busbar 100 to prevent short circuit due to contact between the busbar 100 and metal components adjacent thereto.

The cover member 200 may be located so as to wrap around a middle part of the busbar 100, excluding the ends. As described above, the cover member 200 may be made of an electrically insulative material to prevent contact between the busbar 100 and a metal adjacent thereto, and the cover member 200 may be made of an elastic material to protect the busbar 100 from external impact, as needed.

As an example, the cover member 200 may be made of a material including at least one of silicone, rubber, polyurethane, mica, a plastic resin, glass fiber woven fabric, and a mixture of mPPO and glass fiber. However, the material for the cover member 200 is not limited thereto, as long as the state in which the cover member 200 wraps around the busbar 100 is maintained and contact between the busbar 100 and a metal material adjacent thereto is prevented, whereby insulation of the busbar 100 is maintained.

The cover cap 300 may be located so as to wrap around each end of the busbar 100 that is not wrapped by the cover member 200 and a part of the cover member 200.

A first receiving portion 310, which defines a predetermined space, may be formed in a part of the cover cap 300 protruding toward one side of the cover member 200, and a second receiving portion 320 may be formed between the first receiving portion 310 and the cover member 200.

The first receiving portion 310 is a space in which a bolt and a nut may be received when the busbar 100 is connected to a battery module or the like using the bolt and the nut, whereby it is possible to maintain insulation of the bolt and the nut fastened to the busbar 100.

The second receiving portion 320 may be formed between the first receiving portion 310 and the cover member 200. The second receiving portion 320 defines a predetermined space to receive the thermistor assembly 400.

The second receiving portion 320 may block contact between the thermistor assembly 400 received therein and a metal member adjacent thereto, e.g., a module case configured to receive a battery cell, thereby preventing short circuit.

A recess 330, which is a space in which a wire 430 of the thermistor assembly 400 is received, may be formed at the position at which the wire 430 and the cover cap 300 are in tight contact with each other.

The recess 330 may wrap around the wire 430 to protect the wire 430 from external impact.

Next, the thermistor assembly 400, which is configured to measure the temperature of the busbar 100, may include a tight-contact plate 410, a thermistor 420, and a wire 430.

The tight-contact plate 410 may be flat, may be made of a thermally conductive and electrically insulative material, and may be located under the second receiving portion 320.

The tight-contact plate 410 may be formed so as to have an area greater than the horizontal sectional area of the second receiving portion 320, and may support the thermistor 420 located at an upper surface thereof.

The thermistor 420 is received in the second receiving portion 320, and may be a sensor located at the upper surface of the tight-contact plate 410 to measure the temperature of the busbar 100.

The thermistor 420 has the advantage of measuring the temperature of the busbar 100 transmitted through the tight-contact plate 410 in real time, whereby it is possible to immediately respond to change in temperature of the busbar 100.

At this time, the second receiving portion 320, which receives the thermistor 420, may be formed so as to have a size capable of being in tight contact with the thermistor 420, whereby it is possible to protect the thermistor 420 from external impact.

One side of the wire 430 may be connected to the thermistor 420, and the other side of the wire may be connected to a control component, such as a battery management system (BMS).

The wire 430 allows a temperature measurement value and a signal of the busbar 100 measured by the thermistor 420 to be transmitted to the control member (not shown).

An adhesive tape 500 may be formed at each of a lower surface of the tight-contact plate 410 and a lower surface of the wire 430 received in the recess 330 to fix the tight-contact plate 410 and the wire 430.

The adhesive tape 500 may be made of a thermally conductive and electrically insulative material, e.g., an epoxy resin; however, the material for the adhesive tape 500 is not limited thereto as long as the adhesive tape 500 is thermally conductive and electrically insulative, is capable of fixing the tight-contact plate 410 and the wire 430, and is capable of transferring heat generated by the busbar 100 to the tight-contact plate 410.

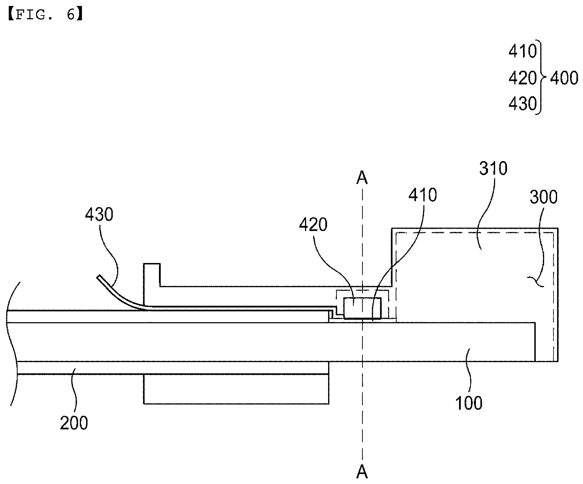

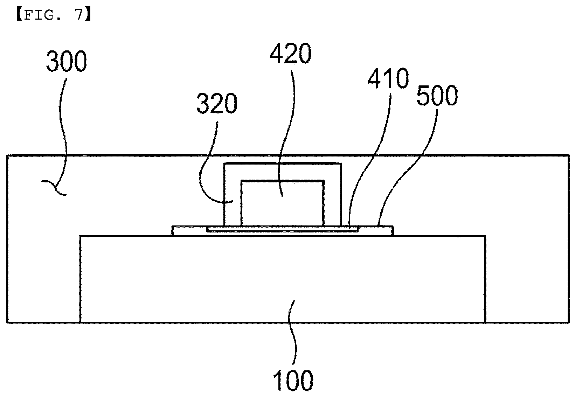

FIG. 6 is a sectional view of a busbar assembly according to a second preferred embodiment of the present invention, cut in the vertical direction, and FIG. 7 is a sectional view taken along line A-A of FIG. 6.

Referring to FIGs. 6 and 7, the busbar assembly according to the second preferred embodiment of the present invention is identical to the busbar assembly according to the first embodiment described with reference to FIGs. 2 to 5 except for the size of a second receiving portion 320, and therefore a description of the same configuration will be omitted.

In the busbar assembly according to the second embodiment of the present invention, the second receiving portion 320 may be formed so as to have a shape and a size such that an inner surface of the second receiving portion 320 and a thermistor 420 are spaced apart from each other so as not to be in contact with each other.

The second receiving portion 320 according to the second embodiment has the advantage of being spaced apart from the thermistor 420 such that an empty space is defined between the second receiving portion 320 and the thermistor 420 and the empty space serves as a buffer against external impact.

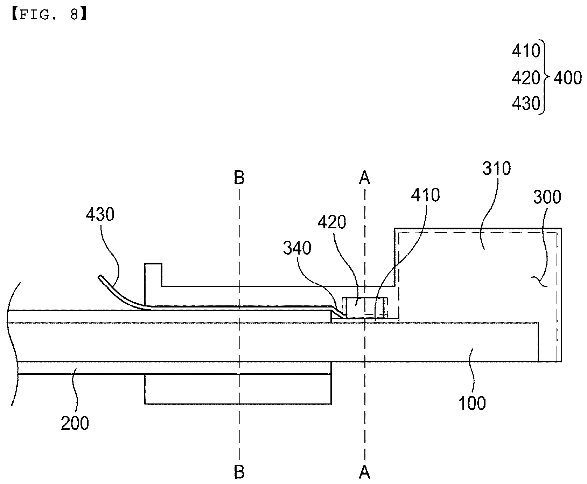

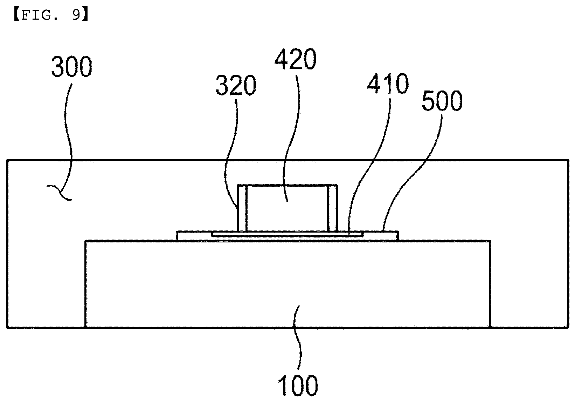

FIG. 8 is a sectional view of a busbar assembly according to a third preferred embodiment of the present invention, cut in the vertical direction, and FIG. 9 is a sectional view taken along line A-A of FIG. 8.

Referring to FIGs. 8 and 9, the busbar assembly according to the third preferred embodiment of the present invention is identical to the busbar assembly according to the first embodiment described with reference to FIGs. 2 to 5 except that an inclined portion 340 is formed at a cover cap 300, and therefore a description of the same configuration will be omitted.

In the busbar assembly according to the third embodiment, the cover cap 300 is provided with an inclined portion 340 inclined at a predetermined angle from a lower end of a second receiving portion 320 in a direction toward a recess 330.

The inclined portion 340 is formed such that the angle of a bent part of a wire 430 is gentle, which has the advantage of eliminating damage to the wire 430 due to bending.

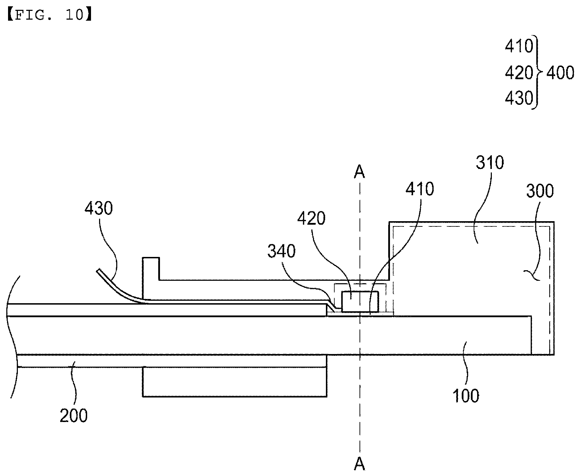

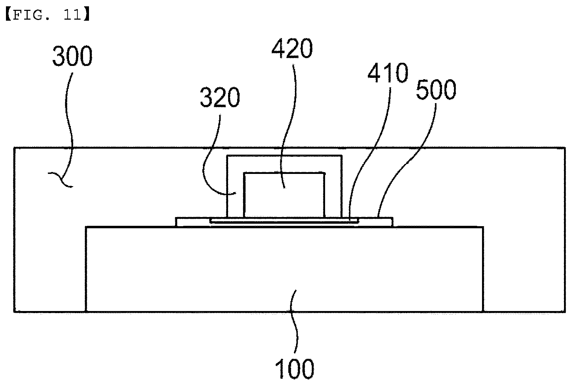

FIG. 10 is a sectional view of a busbar assembly according to a fourth preferred embodiment of the present invention, cut in the vertical direction, and FIG. 11 is a sectional view taken along line A-A of FIG. 10.

Referring to FIGs. 10 and 11, the busbar assembly according to the fourth preferred embodiment of the present invention is identical to the busbar assembly according to the first embodiment described with reference to FIGs. 2 to 5 except for the size of a second receiving portion 320 and an inclined portion 340 formed at a cover cap 300, and therefore a description of the same configuration will be omitted.

In the busbar assembly according to the fourth embodiment of the present invention, the second receiving portion 320 may be formed so as to have a size and a shape such that the second receiving portion 320 is spaced apart from a thermistor 420 received in the second receiving portion 320, and an empty space defined between the second receiving portion 320 and the thermistor 420 may serve as a buffer against external impact.

The inclined portion 340 may be formed so as to be inclined at a predetermined angle from a lower end of the second receiving portion 320 in a direction toward a recess 330, whereby the angle of a bent part of a wire 430 extending from the lower end of the second receiving portion 320 in the direction toward the recess 330 may be gentle, which has the advantage of reducing damage to the wire 430 due to bending.

In addition, the present invention may provide a battery pack including the busbar assembly and a device having the battery pack mounted therein.

### (Description of Reference Numerals)

100: Busbar
200: Cover member
300: Cover cap
310: First receiving portion
320: Second receiving portion
330: Recess
340: Inclined portion
400: Thermistor assembly
410: Tight-contact plate
420: Thermistor
430: Wire
500: Adhesive tape

In addition, the present invention may provide a battery pack including the busbar assembly and a device having the battery pack mounted therein.

Those skilled in the art to which the present invention pertains will appreciate that various applications and modifications are possible within the category of the present invention based on the above description.

### (Description of Reference Numerals)

100: Busbar
200: Cover member
300: Cover cap
310: First receiving portion
320: Second receiving portion
330: Recess
340: Inclined portion
400: Thermistor assembly
410: Tight-contact plate
420: Thermistor
430: Wire
500: Adhesive tape

## Claims

1. A busbar assembly comprising:
a busbar (100) made of a copper material;
a cover member (200) configured to wrap around a part of the busbar (100);
a cover cap (300) located so as to wrap around one side of the cover member (200) and the busbar (100) protruding from the one side of the cover member (200); and
a thermistor assembly (400) positioned such that the cover cap (300) wraps around the thermistor assembly (400), the thermistor assembly (400) being in tight contact with the busbar (100),
wherein the cover cap (300) includes a first receiving portion (310) and a second receiving portion (320), the first receiving portion (310) located at a part of the busbar (100) protruding toward the one side of the cover member (200), and the second receiving portion (320) located between the first receiving portion (310) and the cover member (200) and defining a predetermined space to receive the thermistor assembly (400).

2. The busbar assembly according to claim 1, wherein the cover cap (300) is made of a material that is electrically insulative and elastic.

3. The busbar assembly according to claim 2, wherein the material includes at least one of silicone, rubber, polyurethane, mica, a plastic resin, glass fiber woven fabric, and a mixture of mPPO and glass fiber.

4. The busbar assembly according to claim 1, wherein the thermistor assembly (400) includes:
a tight-contact plate (410) in tight contact with the busbar (100);
a thermistor (420) attached to the tight-contact plate (410), the thermistor (420) being configured to measure temperature; and
a wire (430) connected to the thermistor (420) and extending out of the cover cap (300).

5. The busbar assembly according to claim 4, wherein the thermistor (420) is received in the second receiving portion (320).

6. The busbar assembly according to claim 5, wherein the second receiving portion (320) is configured to have a size such that an inner surface of the second receiving portion (320) is in tight contact with the thermistor (420).

7. The busbar assembly according to claim 5, wherein the second receiving portion (320) is configured to have a shape and a size such that an inner surface of the second receiving portion (320) is spaced apart from the thermistor (420).

8. The busbar assembly according to claim 4, wherein the tight-contact plate (410) comprises a material that is electrically insulative and thermally conductive.

9. The busbar assembly according to claim 4, wherein an adhesive tape (500) configured to fix the tight-contact plate (410) is attached to a lower surface of the tight-contact plate (410).

10. The busbar assembly according to claim 4, wherein the tight-contact plate (410) has an area greater than a horizontal sectional area of the second receiving portion (320).

11. The busbar assembly according to claim 4, wherein the cover cap (300) includes a recess (330) having a predetermined depth such that the wire (430) can be inserted into the recess (330).

12. The busbar assembly according to claim 11, wherein the cover cap (300) includes an inclined portion (340) inclined at a predetermined angle from a lower end of the second receiving portion (320) in a direction toward the recess (330).

13. The busbar assembly according to claim 10, wherein an adhesive tape (500) configured to fix the wire (430) is attached to a lower surface of the wire (430).

14. A battery pack including the busbar assembly according to any one of claims 1 to 13.

## Patentansprüche

1. Sammelschienenanordnung aufweisend:
eine Sammelschiene (100) hergestellt aus einem Kupfermaterial;
ein Abdeckelement (200), das konfiguriert ist, einen Teil der Sammelschiene (100) zu umwickeln;
eine Abdeckkappe (300), die so angeordnet ist, dass sie eine Seite des Abdeckelements (200) und die Sammelschiene (100), die von der einen Seite des Abdeckelements (200) vorsteht, umwickelt; und
eine Thermistoranordnung (400), die so positioniert ist, dass die Abdeckkappe (300) die Thermistoranordnung (400) umwickelt, wobei die Thermistoranordnung (400) in engem Kontakt mit der Sammelschiene (100) steht,
wobei die Abdeckkappe (300) einen ersten Aufnahmeabschnitt (310) und einen zweiten Aufnahmeabschnitt (320) aufweist, wobei der erste Aufnahmeabschnitt (310) an einem Teil der Sammelschiene (100) angeordnet ist, der in Richtung der einen Seite des Abdeckelements (200) vorsteht, und der zweite Aufnahmeabschnitt (320) zwischen dem ersten Aufnahmeabschnitt (310) und dem Abdeckelement (200) angeordnet ist und einen vorbestimmten Raum zur Aufnahme der Thermistoranordnung (400) definiert.

2. Sammelschienenanordnung nach Anspruch 1, wobei die Abdeckkappe (300) aus einem Material hergestellt ist, das elektrisch isolierend und elastisch ist.

3. Sammelschienenanordnung nach Anspruch 2, wobei das Material mindestens eines von Silikon, Gummi, Polyurethan, MICA, einem Kunststoffharz, Glasfasergewebe und einer Mischung aus mPPO und Glasfaser aufweist.

4. Sammelschienenanordnung nach Anspruch 1, wobei die Thermistoranordnung (400) aufweist:
eine Engkontaktplatte (410) in engem Kontakt mit der Sammelschiene (100);
einen Thermistor (420), der an der Engkontaktplatte (410) angebracht ist, wobei der Thermistor (420) konfiguriert ist, Temperatur zu messen; und
einen Draht (430), der mit dem Thermistor (420) verbunden ist und sich aus der Abdeckkappe (300) heraus erstreckt.

5. Sammelschienenanordnung nach Anspruch 4, wobei der Thermistor (420) in dem zweiten Aufnahmeabschnitt (320) aufgenommen ist.

6. Sammelschienenanordnung nach Anspruch 5, wobei der zweite Aufnahmeabschnitt (320) konfiguriert ist, eine solche Größe aufzuweisen, dass eine Innenfläche des zweiten Aufnahmeabschnitts (320) in engem Kontakt mit dem Thermistor (420) steht.

7. Sammelschienenanordnung nach Anspruch 5, wobei der zweite Aufnahmeabschnitt (320) konfiguriert ist, eine solche Form und Größe aufzuweisen, dass eine Innenfläche des zweiten Aufnahmeabschnitts (320) von dem Thermistor (420) beabstandet ist.

8. Sammelschienenanordnung nach Anspruch 4, wobei die Engkontaktplatte (410) ein Material aufweist, das elektrisch isolierend und thermisch leitfähig ist.

9. Sammelschienenanordnung nach Anspruch 4, wobei ein Klebeband (500), das konfiguriert ist, die Engkontaktplatte (410) zu fixieren, an einer Unterseite der Engkontaktplatte (410) angebracht ist.

10. Sammelschienenanordnung nach Anspruch 4, wobei die Engkontaktplatte (410) eine Fläche aufweist, die größer als eine horizontale Querschnittsfläche des zweiten Aufnahmeabschnitts (320) ist.

11. Sammelschienenanordnung nach Anspruch 4, wobei die Abdeckkappe (300) eine Aussparung (330) mit einer vorbestimmten Tiefe aufweist, so dass der Draht (430) in die Aussparung (330) eingeführt werden kann.

12. Sammelschienenanordnung nach Anspruch 11, wobei die Abdeckkappe (300) einen geneigten Abschnitt (340) aufweist, der in einem vorbestimmten Winkel von einem unteren Ende des zweiten Aufnahmeabschnitts (320) in einer Richtung zu der Aussparung (330) geneigt ist.

13. Sammelschienenanordnung nach Anspruch 10, wobei ein Klebeband (500), das konfiguriert ist, den Draht (430) zu fixieren, an einer Unterseite des Drahts (430) angebracht ist.

14. Batteriepack aufweisend die Sammelschienenanordnung nach einem der Ansprüche 1 bis 13.

## Revendications

1. Ensemble de barre omnibus comprenant :
une barre omnibus (100) réalisée avec un matériau cuivreux ;
un élément de couverture (200) configuré pour s'envelopper autour d'une partie de la barre omnibus (100) ;
un couvercle (300) positionné de façon à s'envelopper autour d'un côté de l'élément de couverture (200) et de la barre omnibus (100) saillant de l'un côté de l'élément de couverture (200) ; et
un ensemble de thermistor (400) positionné de façon à ce que le couvercle (300) s'enveloppe autour de l'ensemble de thermistor (400), l'ensemble de thermistor (400) étant en contact étroit avec la barre omnibus (100),
le couvercle (300) comprenant une première partie réceptrice (310) et une deuxième partie réceptrice (320), la première partie réceptrice (310) étant positionnée sur une partie de la barre omnibus (100) dépassant vers l'un côté de l'élément de couverture (200), et la deuxième partie réceptrice (320) étant positionnée entre la première partie réceptrice (310) et l'élément de couverture (200), et définissant un espace prédéterminé pour recevoir l'ensemble de thermistor (400).

2. Ensemble de barre omnibus selon la revendication 1, le couvercle (300) étant réalisé avec un matériau électro-isolant et élastique.

3. Ensemble de barre omnibus selon la revendication 2, le matériau comprenant au moins un des suivants : silicone, caoutchouc, polyuréthane, mica, une résine plastique, du tissu tissé en fibre de verre, et un mélange de mPPO et de fibre de verre.

4. Ensemble de barre omnibus selon la revendication 1, l'ensemble de thermistor (400) comprenant :
une plaque à contact étroit (410) en contact étroit avec la barre omnibus (100) ;
un thermistor (420) fixé sur la plaque à contact étroit (410), le thermistor (420) étant configuré pour mesurer la température ;
un fil (430) connecté au thermistor (420), et s'étendant hors du couvercle (300).

5. Ensemble de barre omnibus selon la revendication 4, le thermistor (420) étant reçu dans la deuxième partie réceptrice (320).

6. Ensemble de barre omnibus selon la revendication 5, la deuxième partie réceptrice (320) étant configurée de sorte que ses dimensions soient telles qu'une surface intérieure de la deuxième partie réceptrice (320) soit en étroit contact avec le thermistor (420).

7. Ensemble de barre omnibus selon la revendication 5, la deuxième partie réceptrice (320) étant configurée de sorte que sa forme et ses dimensions soient telles qu'une surface intérieure de la deuxième partie réceptrice (320) soit espacée du thermistor (420).

8. Ensemble de barre omnibus selon la revendication 4, la plaque à contact étroit (410) comprenant un matériau électro-isolant et thermo-conducteur.

9. Ensemble de barre omnibus selon la revendication 4, un ruban adhésif (500) configuré pour fixer la plaque à contact étroit (410), étant fixé sur une surface inférieure de la plaque à contact étroit (410).

10. Ensemble de barre omnibus selon la revendication 4, la superficie de la plaque à contact étroit (410) étant supérieure à une surface de coupe horizontale de la deuxième partie réceptrice (320).

11. Ensemble de barre omnibus selon la revendication 4, le couvercle (300) comprenant un évidement (330) d'une profondeur prédéterminée de sorte que le fil (430) puisse être inséré dans l'évidement (330).

12. Ensemble de barre omnibus selon la revendication 11, le couvercle (300) comprenant une partie inclinée (340) à un angle prédéterminé depuis une extrémité inférieure de la deuxième partie réceptrice (320) dans la direction de l'évidement (330).

13. Ensemble de barre omnibus selon la revendication 10, un ruban adhésif (500) configuré pour fixer le fil (430) étant fixé sur une surface inférieure du fil (430).

14. Bloc-batterie comprenant l'ensemble de barre omnibus selon une quelconque des revendications 1 à 13.
